Europäisches Patentamt

European Patent Office

Office européen des brevets

(11) Veröffentlichungsnummer: **0 250 936 B1**

# (12) EUROPÄISCHE PATENTSCHRIFT

(45) Veröffentlichungstag der Patentschrift: 06.11.91

(51) Int. Cl.⁵: **H04Q 11/04, H04M 3/24**

(21) Anmeldenummer: 87108196.4

(22) Anmeldetag: 05.06.87

(54) Verfahren zur Überwachung der Informationsübertragung auf durchgeschalteten vierdrähtigen Verbindungswegen, insbesondere semi-permanent durchgeschalteten Verbindungswegen in digitalen Zeitmultiplex-Vermittlungsstellen.

(30) Priorität: 27.06.86 DE 3621531

(43) Veröffentlichungstag der Anmeldung:
07.01.88 Patentblatt 88/01

(45) Bekanntmachung des Hinweises auf die
Patenterteilung:
06.11.91 Patentblatt 91/45

(84) Benannte Vertragsstaaten:
AT BE CH DE FR GB IT LI NL SE

(56) Entgegenhaltungen:
FR-A- 2 233 780
FR-A- 2 281 605
FR-A- 2 305 908
GB-A- 1 099 469
US-A- 4 261 054

AT & T TECHNICAL JOURNAL, Band 64, Nr. 6,
Juli/August 1985, Seiten 1385-1416, AT & T,
New York, US; G. HAUGK et al.: "The 5ESS
switching system: maintenance capabilities"

(73) Patentinhaber: SIEMENS AKTIENGESELL-
SCHAFT
Wittelsbacherplatz 2
W-8000 München 2(DE)

(72) Erfinder: Schmidt, Lothar
Albert-Schweizer-Ring 25
W-8080 Fürstenfeldbruck(DE)
Erfinder: Schaich, Gerhard
Theresienhöhe 6c
W-8000 München 2(DE)
Erfinder: Ernst, Wolfram
Karl-Witthalm-Strasse 9
W-8000 München 70(DE)

AT & T BELL LABORATORIES RECORD, Heft 3, Mai 1985, Seiten 22-26, New York, US; H.J. BEUSCHER et al.: "Electronic twins protect 5ESStm switch operations"

INTERNATIONAL SWITCHING SYMPOSIUM, Kyoto, 25. - 29. Oktober 1976, Seiten 141.4.1 - 141.4.6; G. ALTEHAGE et al.: "PCM switching system EWSD with TDM switching network for long-distance and local transit traffic"

BRITISH TELECOMMUNICATIONS ENGINEE-RING, Band 3, Nr. 4, Januar 1985, Seiten 255-258, London, GB; D.C. BUTTERWORTH et al.: "System X: common-channel signalling-progress on installation and testing"

PATENT ABSTRACTS OF JAPAN, Band 8, Nr. 272 (E-284)[1709], 13. Dezember 1984; & JP-A-59 143 442

TELCOM REPORT, Band 8, Nr. 5, September/Oktober 1985, Seiten 321-326, Berlin, DE; F. HLAWA: "Wartung von PCM-Anschlüssen im System EWSD"

TELCOM REPORT, Band 9, Nr. 3, Mai/Juni 1986, Seiten 181-185, Berlin, DE; E. HAENSEL et al.: "Sprechwege-Prüfprogramm für das digitale Koppelnetz macht EWSD sicherer"

TELCOM REPORT, Band 4, Beiheft "Digitalvermittlungssystem EWSD", 1981, Seiten 19-27, Berlin, DE; R. BORGER et al.: "Periphere Anschlussgruppen im System EWSD"

COLLOQUE INTERNATIONAL SUR LA TELEIN-FORMATIQUE, Paris, 24. - 28. März 1969, Teil 1, Seiten 287-295; I.J. HOOGEVEEN: "A.T.D.M. switching network"

INTERNATIONAL SWITCHING SYMPOSIUM, Montreal, 21. - 25. September 1981, "Session 34A", "Paper 3", Seiten 1-9; F.J. SCHRAMEL et al.: "The peripheral control domain, an all-digital intelligent terminal for subscribers and trunks in the PRX/D system"

**Beschreibung**

Die Erfindung betrifft ein Verfahren zur Überwachung der Informationsübertragung auf durchgeschalteten vierdrähtigen Verbindungswegen, insbesondere semipermanent durchgeschalteten Verbindungswegen in digitalen Zeitmultiplex-Vermittlungsstellen, bei denen in mehrere Einheiten gegliederte Anschlußgruppen und ein gedoppeltes Koppelnetz, über das jede Verbindung parallel zweimal geführt ist, periphere Funktionsblöcke bilden, die unter dem Einfluß eines Koordinationsprozessors stehen.

Bei derartig strukturierten Zeitmultiplex-Vermittlungsstellen sind bisher, was die Überwachung ganzer Verbindungswege anbelangt, lediglich im Zusammenhang mit dem Verbindungsaufbau Verbindungsweg-Durchschalteprüfungen vorgenommen worden.

Insbesondere im Hinblick auf semipermanent durchgeschaltete Verbindungen, d. h. also Standverbindungen, die zum Zwecke der Datenübertragung langdauernd eingerichtet sind, besteht jedoch die Notwendigkeit der Überwachung auch während des Bestehens der Verbindung.

Ausfälle von solchen Standverbindungen sind bisher lediglich durch Überwachung der Endgeräte erkannt und durch entsprechende Störmeldungen der Betreiber der Endgeräte erfaßt worden. Da Standverbindungen gewöhnlich über mehrere Vermittlungsstellen laufen, ist bei einer derartigen Überwachung die Fehlerlokalisierung sehr zeitaufwendig.

Aufgabe der vorliegenden Erfindung ist es daher, ein Verfahren zur Überwachung der Informationsübertragung auf durchgeschalteten Verbindungswegen anzugeben, das auf die Verhältnisse der Strukturierung der obengenannten Zeitmultiplex-Vermittlungsstelle zugeschnitten ist.

Eine solche Struktur ist beispielsweise aus TELCOM REPORT, Band 4, Beiheft "Digitalvermittlungssystem EWSD", 1981, Seiten 19 bis 27 bekannt.

Zur Lösung der der Erfindung zugrundeliegenden Aufgabe wird zum Teil auf Prüfprinzipien zurückgegriffen, die in anderem Zusammenhang und in anderer Ausnutzung schon bekannt sind. So zeigt beispielsweise die FR-A-2 233 780 eine Prüfanordnung für eine Zeitvielfachkoppeleinrichtung mit duplizierten Teilkoppelstufen, bei der zur Prüfung der Durchschaltung die den einzelnen Eingängen der Koppeleinrichtung zuzuführenden Informationen mit einem Paritätsbit versehen werden, das über zusätzliche Leitungen und Speicherplätze über die Koppeleinrichtung mitvermittelt wird und ausgangsseitig mittels einer Paritätsprüfung festgestellt wird, ob die Informationen und das zugehörige Paritätsbit unverfälscht die Koppeleinrichtung passiert haben. Diese Prozedur wird hierbei in beiden duplizierten Teilen der Koppeleinrichtung unabhängig von der Prozedur im jeweils anderen Teil der Koppeleinrichtung durchgeführt.

Aus der FR-A-2 281 605 ist ein Verfahren zur Überprüfung der richtigen Durchschalteausführung einer Verbindung bei digitalen Datenübertragungssystemen zwischen einem bestimmten Eingang und zwischen einem bestimmten Ausgang eines der Übertragung von digitalen Daten dienenden Wählers bekannt. Die Überprüfung geschieht hierbei derart, daß ein Paritätsbit, das zusammen mit zugehörigen Daten übertragen wird, vor Eingabe an einen bestimmten Eingang zu einem nicht korrekten Paritätsbit verändert wird, um sozusagen diesen Eingang zu kennzeichnen und daß an dem diesen Eingang entsprechenden Ausgang geprüft wird, ob Daten mit einem falschen Paritätsbit empfangen werden, was einer richtigen Durchschalteausführung entspricht, oder ob Daten mit einem richtigen Paritätsbit auftreten, was ein Indiz dafür ist, daß es sich nicht um die an den betreffen Eingang gegebenen Daten handelt und demnach die Durchschalteausführung nicht korrekt ist. Ein hierbei festgestellter Fehler wird zu einer zentralen Steuerung hin gemeldet, die auch für die genannte Verfälschung des Paritätsbits verantwortlich ist.

Erfindungsgemäß wird diese Aufgabe mit einem Verfahren gelöst, das dadurch gekennzeichnet ist, daß die von den beiden Koppelnetzteilen an eine Anschlußgruppe gelangenden und zum einen Teil über diese in abgehender Übertragungsrichtung an eine Übertragungsstrecke weiter zu übertragenden Kanal-Informationen in deren in dieser Übertragungsrichtung eingangsseitigen Einheit mitlaufend bitweise miteinander verglichen werden, daß die in ankommender Übertragungsrichtung von der Übertragungsstrecke an diese Anschlußgruppe gelangenden Kanal-Informationen in der in dieser Übertragungsrichtung eingangsseitigen Einheit derselben mit einem Paritybit versehen und nach Durchlaufen sämtlicher Einheiten der genannten selben in ankommender Übertragungsrichtung letzten Einheit, in der der Vergleich der vom Koppelnetz kommenden Kanal-Informationen stattfindet, einer Parityprüfung unterzogen werden, daß diese vom Koppelnetz kommenden Kanal-Informationen in dieser Einheit der Anschlußgruppe ebenfalls mit einem Paritybit versehen und soweit sie zur PCM-Strecke hin übertragen werden, in der genannten in der anderen Übertragungsrichtung eingangsseitigen Einheit der Anschlußgruppe einer Parityprüfung unterworfen werden, und daß, sofern diese Parityprüfung das Vorliegen eines Fehlers signalisiert, das Paritybit mit dem die von der Übertragungsstrecke ankommenden PCM-Kanal-Informationen versehen werden, der tatsächlichen Parität widersprechend, invertiert wird, so daß auch die entsprechende Paritätsprüfung in der in dieser Übertragungsrichtung letzten Einheit ein Fehlersignal ergibt.

Das Wesen der Erfindung besteht also zum einen in der mitlaufenden kanalindividuellen Überwachung, ferner darin, daß den unterschiedlichen Ausfallbereichen der vorausgesetzten digitalen Zeitmultiplex-Vermittlungsstelle entsprechend unterschiedliche Überwachungsprinzipien zur Anwendung kommen und schließlich darin, daß Maßnahmen getroffen sind, aufgrund deren unabhängig vom Fehlerort die Fehlererfassung an einer Zentralstelle der Vermittlungsstelle erfolgen kann.

Durch eine weitere Ausgestaltung des erfindungsgemäßen Verfahrens läßt sich in die verbindungsbezogene Überwachung unter Voraussetzung einer speziellen Struktur der Anschlußgruppen auch die Überwachung von die Verbindung betreffenden Ansteueradressen einbeziehen.

Eine weitere Ausgestaltung der Erfindung betrifft die Behandlung von Fehlermeldungen, die erst dann zur Abgabe eines Störsignals führen, wenn die Fehlerhäufigkeit pro Zeiteinheit einen vorgegebenen Grenzwert überschritten hat.

Schließlich sind in weiterer Ausgestaltung der Erfindung Maßnahmen zur Fehlerlokalisierung bei in den Anschlußgruppen liegenden Fehlern angegeben.

Nachstehend wird die Erfindung anhand eines Ausführungsbeispiels unter Bezugnahme auf die Zeichnung näher erläutert.

In der Zeichnung zeigen:

FIG 1    ein mehrere Zeitmultiplex-Vermittlungsstellen umfassendes Fernmeldesystem zur Veranschaulichung eines typischen Verbindungsweges für Standverbindungen,

FIG 2    eine mehr ins einzelne gehende Darstellung einer Anschlußgruppe einer Zeitmultiplex-Vermittlungsstelle der vorausgesetzten Art,

FIG 3    dieselbe Anschlußgruppe ergänzt durch zur Fehlerlokalisierung erforderliche Einheiten und Prüfverbindungswege.

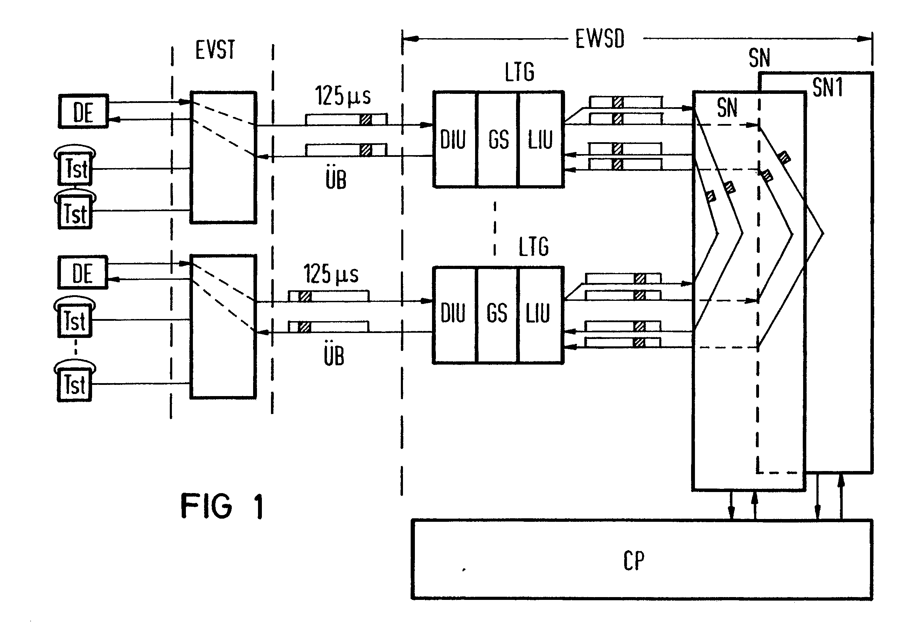

Das in der FIG 1 dargestellte Fernmeldenetz zeigt zwei Endvermittlungsstellen EVST, an die eine Reihe von Endgeräten in Form von Telefonstationen Tst und von Datenendgeräten DE angeschlossen sind. Es zeigt ferner eine weitere Zeitmultiplex-Vermittlungsstelle EWSD, die über Übertragungsstrecken ÜB mit den Endvermittlungsstellen in Verbindung steht und in dem zu erläuternden Zusammenhang einer Standverbindung als Durchgangsvermittlungsstelle fungiert. Diese weitere Zeitmultiplex-Vermittlungsstelle EWSD ist, wie übrigens auch die Endvermittlungsstellen EVST in periphere Funktionsblöcke in Form von Anschlußgruppen LTG und eines gedoppelten Koppelnetztes SN gegliedert, die unter dem Steuereinfluß eines Koordinationsprozessors CP stehen. Die Anschlußgruppen LTG sind ihrerseits in mehrere Einheiten gegliedert, von denen nur diejenigen dargestellt sind, über die zwischen den Endgeräten zu übertragende Informationen geleitet werden und bei denen es sich um eine Schnittstelleneinheit LIU zum Koppelnetz SN hin, um einen Gruppenkoppler GS und um eine Schnittstelleneinheit zur Übertragungsstrecke ÜB hin handelt. Im Falle einer Standverbindung zwischen den Endgeräten DE, die hier bevorzugt betrachtet wird, ist der Verbindungsweg durchgängig vierdrähtig, d. h. sowohl auf der Teilnehmeranschlußleitung zur Endvermittlungsstelle EVST, in der Endvermittlungsstelle, auf der Übertragungsstrecke ÜB und in der Durchgangsvermittlungsstelle EWSD. Die Telefonstationen Tst sind hingegen über Zweidrahtleitungen an die Endvermittlungsstellen EVST angeschlossen.

Wie die FIG 1 ferner zeigt, läuft eine Verbindung von einer Anschlußgruppe LTG aus sowohl über die Koppelnetzhälfte SNO als auch über die Koppelnetzhälfte SN1.

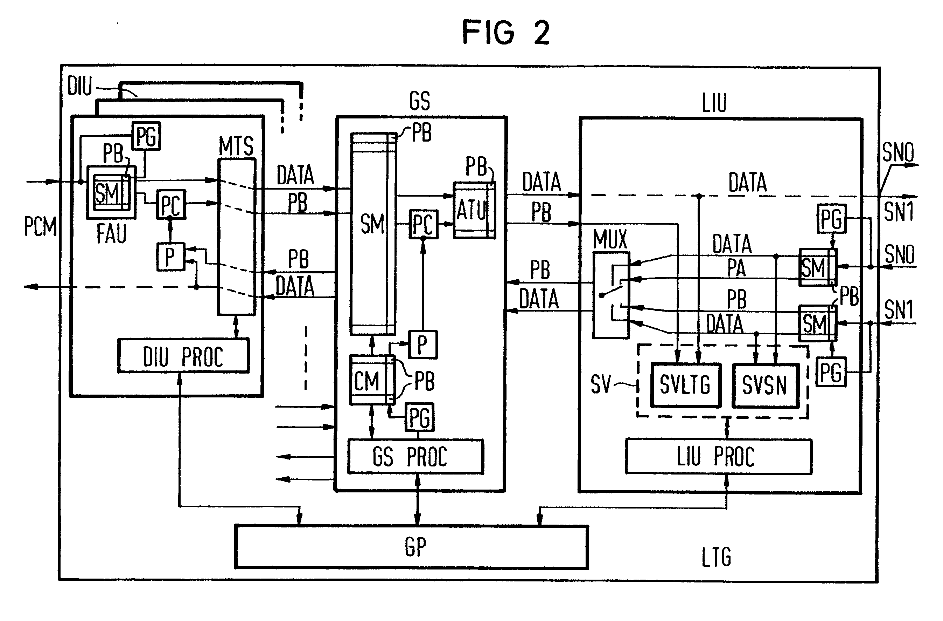

In der FIG 2 ist eine Anschlußgruppe LTG mehr ins einzelne gehend dargestellt.

Wie schon angedeutet, besteht eine solche Anschlußgruppe aus mehreren Einheiten, nämlich Schnittstellen DIU und LIU sowie einem Gruppenkoppler GS. Diese Einheiten stehen unter dem Steuereinfluß eines Gruppenprozessors GP, der seinerseits wiederum vom schon erwähnten Koordinationsprozessor CP beeinflußt wird, wobei die entsprechenden Steuerwege über das Koppelenetz SN laufen (siehe hierzu auch FIG 1).

Die erwähnten Einheiten der Anschlußgruppen enthalten ihrerseits wiederum mehrere Bestandteile, deren Ausfall oder Teilausfall zur Unterbrechung zumindest einzelner über sie laufender Verbindungen führt. Bei der Schnittstelleneinheit DIU ist hier eine Einrichtung FAU zum Phasenausgleich zu erwähnen, die einen Sprachspeicher SM enthält, beim Gruppenkoppler GS sind dies ein Vermittlungsspeicher, der ebenfalls aus einem Sprachspeicher SM besteht sowie ein dazugehöriger Haltespeicher CM, in dem Steueradressen für den Sprachspeicher gespeichert sind sowie eine Dämpfungseinrichtung ATU. Bei der Schnittstelleneinheit LIU sind dies ebenfalls der Zeitlagenanpassung, d. h. der Synchronisierung der Kanal-Informationen auf einen internen Takt dienende Sprachspeicher SM.

Der zentrale Teil der für die Durchführung der erfindungsgemäßen Überwachung erforderlichen Überwachungsschaltung ist Bestandteil der Schnittstelleneinheit LIU und wird mit SV bezeichnet. Er besteht wiederum aus zwei Funktikonsblöcken SVSN und SVLTG, die entsprechend dem der Erfindung zugrundeliegenden Konzept für die Überwachung des Koppelnetzes SN bzw. der Anschlußgruppe LTG verantwortlich sind.

Nachstehend wird auf die Durchführung des erfindungsgemäßen Verfahrens näher eingegangen.

Einem ersten Teilmerkmal des erfindungsgemäßen Verfahrens entsprechend werden die von den beiden Koppelnetzhälften SNO und SN1 an die Schnittstelle LIU gelangenden Kanal-Informationen, die in der FIGUR mit DATA bezeichnet sind, vor ihrer Weitergabe über die Gruppenkoppler GS und die Schnittstelleneinheit DIU an die Übertragungsstrecke ÜB durch die Überwachungsschaltung SVSN mitlaufend bitweise auf Übereinstimmung verglichen. Von beiden vom Koppelnetz SN kommenden Datenströmen wird wahlweise nur einer übertragen je nach Schaltstellung des ebenfalls einen Bestandteil der Schnittstelleneinheit LIU darstellenden Multiplexers MUX.

In Durchführung des der Überwachung der Anschlußgruppe dienenden Teils des erfindungsgemäßen Überwachungsverfahrens werden die in ankommender Übertragungsrichtung von der Übertragungsstrecke an die Schnittstelleneinheit DIU gelangenden Kanal-Informationen mit Hilfe eines Paritybitgenerators PG mit einem Paritybit versehen, das ebenfalls im Sprachspeicher SM dieser Schnittstelleneinheit zwischengespeichert und dann zusammen mit den Kanal-Informationen DATA, über den Gruppenkoppler GS zur Schnittstelleneinheit LIU übertragen, womit in einer Übertragungsrichtung sämtliche im Verbindungsweg liegenden Einheiten der Anschlußgruppe LTG durchlaufen sind. Dort wird durch die erwähnte Überwachungseinrichtung SVLTG eine Parityprüfung vorgenommen, die eine Aussage über den Verbindungsweg durch die Anschlußgruppe LTG in der Übertragungsrichtung vom Eingangsanschluß für die Übertragungsanschluß für die Übertragungsstrecke PCMS zum koppelnetzseitigen Ausgangsanschluß macht.

Die erwähnten, von den Koppelnetzhälften SNO und SN1 kommenden Kanal-Informationen, die in der entgegengesetzten Übertragungsrichtung zu übertragen sind, werden eingangs der Bitstelleneinheit LIU ebenfalls mit Hilfe eines Paritygenerators PG mit einem Paritybit versehen, das zusammen mit diesen Informationen in den dortigen Sprachspeichern SM zwischengespeichert wird. Je nach Schaltstellung des Multiplexers MUX werden die von der einen oder der anderen Koppelfeldhälfte kommenden und mit einem Parity versehenen Kanal-Informationen DATA über den Gruppenkoppler GS an die Schnittstelleneinheit DIU übertragen, womit in dieser entgegengesetzter Übertragungsrichtung ebenfalls sämtliche im Verbindungsweg liegende Teile der Anschlußgruppe LTG durchlaufen sind. Dort wird mit Hilfe eines Parityprüfers P ebenfalls eine Parityprüfung vorgenommen.

Ergibt diese Parityprüfung das Vorliegen eines Fehlers, so wird mit Hilfe einer Einrichtung PC das Paritybit, das den von der Übertragungsstrecke ÜB kommenden Informationen hinzugefügt worden ist, im Widerspruch zur tatsächlichen Parität dieser Information invertiert. Nachdem diese Kanal-Information zusammen mit dem invertierten Paritybit die Einheiten GS und LIU durchlaufen hat, wird daher von der Überwachungseinrichtung SVLTG das Vorliegen eines Fehlers festgestellt.

Auch die in den Haltespeicher CM des Gruppenkopplers GS eingetragenen Ansteueradressen für den Vermittlungsspeicher SM werden mit einem Paritybit versehen und jeweils beim zyklischen Auslesen einer Parityprüfung unterworfen. Wird hierbei ein Fehler festgestellt, so wird entsprechend der vorgenannten Prozedur das ursprünglich für die von der Übertragungsstrecke ÜB kommende PCM-Kanal-Information gebildete Paritybit invertiert, so daß auch in diesem Fall die durch die Überwachungseinrichtung SVLTG in der Schnittstelleneinheit LIU vorgenommene Parityprüfung das Vorliegen eines Fehlers signalisiert.

Die auf diese Weise auf der Baueinheit LIU zentral erfaßten Kanalfehler für das Koppelnetz und für die Anschlußgruppe werden getrennt für die beiden Bereiche in kanalindividuellen Fehlerzählern aufsummiert. Die Zählerstände dieser Zähler werden in bestimmten Zeitabständen abgefragt und dem Gruppenprozessor GP gemeldet, wo wiederum je Kanal ein Vergleich mit einer vorgegebenen Güteschwelle vorgenommen wird. Beim Überschreiten einer solchen Güteschwelle erfolgt eine Störungsmeldung an den Koordinationsprozessor CP.

Sofern es sich um einen Fehler im Koppelnetz handelt und dieser Fehler eine Standverbindung betrifft, veranlaßt der Koordinationsprozessor daraufhin den Aufbau dieser Standverbindung über einen Ersatzweg.

Im Falle der Abgabe einer Störmeldung wird zunächst in der nachstehenden Art und Weise eine Fehlerlokalisierung vorgenommen und daraufhin eine Fehlermeldung zusammen mit dem Ergebnis der Fehlerlokalisierung an den Koordinationsprozessor abgegeben.

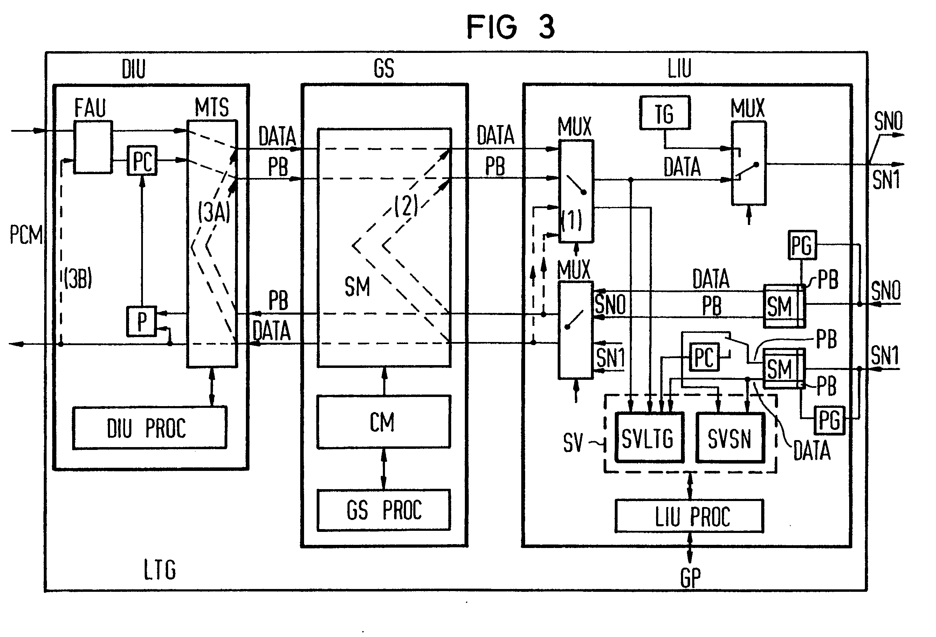

Betrifft die Störmeldung das Koppelnetz SN, so wird zur Fehlerlokalisierung lediglich geprüft, ob etwa die Überwachungsanordnung SVSN selbst die Fehlerquelle ist und zwar dadurch, daß, wie in der FIG 3 angedeutet, die von der Einheit LU zum Gruppenkoppler GS weiterzugebende Kanalinformation vor und nach Invertierung des zugehörigen Paritybits vor Durchlaufen weiterer Einheiten der Anschlußgruppe durch die Überwachungseinrichtung SVSN einer Parityprüfung unterzogen, womit eine Gut/Schlecht-Aussage bezüglich dieser Überwachungsschaltung erhalten wird.

Im Falle einer auf die Anschlußgruppe LTG bezogenen Störmeldung wird zunächst in der gleichen Weise eine Überprüfung der betreffenden Überwachungseinrichtung SVLTG vorgenommen, danach werden zur weiteren Fehlerlokalisierung, wie ebenfalls aus der FIG 3 ersichtlich, nacheinander Prüfschleifen (1) auf der Baueinheit LIU, (2) im Gruppenkoppler GS und (3a) und (3b) auf der Schnittstelleneinheit DIU gebildet. Über diese Prüfschleifen wird eine Prüfbitkombination gesendet, die durch eine Einrichtung TG, die zur Baueinheit LIU gehört, erzeugt wird, und über das Koppelnetz SN gesendet und von dort wieder an die Baueinheit LIU gelangt und dort mit einem Paritybit versehen wird. Die Auswertung der nach Durchlaufen der jeweiligen Prüfschleife zurückkommenden Prüfbitkombinationen durch die Überwachungseinrichtung SVLTG erfolgt in der beschriebenen Art und Weise.

**Patentansprüche**

1. Verfahren zur Überwachung der Informationsübertragung auf durchgeschalteten vierdrähtigen Verbindungswegen, insbesondere semipermanent durchgeschalteten Verbindungswegen, in digitalen Zeitmultiplex-Vermittlungsstellen, bei denen in mehrere Einheiten (DIU, GS, LIU) gegliederte Anschlußgruppen (LTG) und ein gedoppeltes Koppelnetz, (SN) über das jede Verbindung parallel zweimal geführt ist, periphere Funktionsblöcke bilden, die unter dem Einfluß eines Koordinationsprozessors (CP) stehen,
**dadurch gekennzeichnet,**
daß die von den beiden Koppelnetzteilen (SN0, SN1) an eine Anschlußgruppe (LTG) gelangen und zum einen Teil über diese in abgehender Übertragungsrichtung an eine Übertragungsstrecke (ÜB) weiter zu übertragende Kanal-Informationen in deren in dieser Übertragungsrichtung eingangsseitigen Einheit LIU) mitlaufend bitweise miteinander verglichen werden, daß die in ankommender Übertragungsrichtung von der Übertragungsstrecke (ÜB) an diese Anschlußgruppe (LTG) gelangenden Kanal-Informationen in der in dieser Übertragungsrichtung eingangsseitigen Einheit (DIU) derselben mit einem Paritybit (PB) versehen und nach Durchlaufen sämtlicher Einheiten (DIU,GS, LIU) in der genannten selben in ankommender Übertragungsrichtung letzten Einheit (LIU) , in der der Vergleich der vom Koppelnetz (SN) kommenden PCM-Signal Informationen (DATA) stattfindet, einer Paritätprüfung unterzogen werden, daß diese vom Koppelnetz kommenden Kanal-Informationen in dieser Einheit (LIU) der Anschlußgruppe (LTG) ebenfalls mit einem Paritybit versehen und soweit sie zur Übertragungsstrecke (ÜB) hin übertragen werden, in der genannten in ankommender Übertragungsrichtung eingangsseitigen Einheit (DIU) der Anschlußgruppe (LTG) einer Paritätprüfung unterworfen werden, und daß, sofern diese Paritätprüfung das Vorliegen eines Fehlers signalisiert, das Paritybit (PB), mit dem die von der Übertragungsstrecke (ÜB) ankommenden Kanal-Informationen versehen werden, der tatsächlichen Parität widersprechend, invertiert wird, so daß auch die entsprechende Paritätsprüfung in der in diese Übertragungseinrichtung letzten Einheit (LIU) ein Fehlersignal ergibt.

2. Verfahren nach Anspruch 1 zur Anwendung bei einer Zeitmultiplex-Vermittlungsstelle, bei der die Anschlußgruppen (LTG) als Baueinheit eine Koppelstufe (SM) enthalten, die durch in einem Haltespeicher (CM) gespeicherte und zyklisch zerstörungsfrei ausgelesene Ansteueradressen gesteuert wird,
**dadurch gekennzeichnet,**
daß die in dem Haltespeicher (CM) gespeicherten Ansteueradressen mit einem Paritybit (PB) versehen und jeweils nach Auslesen einer Paritätprüfung unterworfen werden, und daß im Falle eines festgestellten Fehlers das zu den in ankommender Übertragungsrichtung letzten Einheit (LIU) der Anschlußgruppe übertragenen Kanal-Informationen (DATA) zugeordnete Paritybit (PB) der tatsächlichen Parität dieser Kanal-Informationen (DATA) widersprechend invertiert wird.

3. Verfahren nach Anspruch 1 oder 2, **dadurch gekennzeichnet,** daß die bei beiden Arten der Überwachung sich ergebenden Fehlermeldungen gezählt und deren Summe in bestimmten Zeitabständen mit einem Güteschwellwert verglichen wird, dessen Überschreiten ein Störsignal auslöst.

4. Verfahren nach Anspruch 3, **dadurch gekennzeichnet,** daß im Falle einer Störmeldung die betreffende Überwachungseinrichtung (SVLTG) überprüft wird, indem die vom Koppelnetz (SN) kommende Kanalinformation vor und nach einer Invertierung des zugehörigen Paritybits urch die Überwachungseinrichtung vor Durchlaufen weiterer Einheiten der Anschlußgruppe (LTG) einer Paritätprüfung unterzogen wird.

5. Verfahren nach Anspruch 4, **dadurch gekennzeichnet,** daß im Falle einer eine Anschlußgruppe betreffenden Störmeldung zur weiteren Fehlerortbestimmung die betreffende Überwachungseinrichtung (SVLTG) überprüft wird, indem die vom Koppelnetz (SN) kommende Kanalinformation vor und nach einer Invertierung des zugehörigen Paritybits durch die Überwachungseinrichtung vor Durchlaufen weiterer Einheiten der Anschlußgruppe (LTG) einer Parityprüfung unterzogen wird, nacheinander auf den Baueinheiten (LIU, GS, DIU) der Anschlußgruppe (LTG) Prüfschleifen geschlossen werden, über die jeweils eine mit einem Paritybit versehene Prüfbitkombination geleitet und danach durch die Überwachunbgseinrichtung (SVLTG) einer Parityprüfung unterzogen wird.

6.  Verfahren nach Anspruch 3, **dadurch gekennzeichnet**, daß im Falle einer auf eine semipermanente Verbindung bezogenen, das Koppelnetz (SN) betreffenden Störmeldung diese Verbindung ausgelöst und über einen anderen Verbindungsweg neu aufgebaut wird.

## Claims

1.  Method for monitoring the information transmission on switched 4-wire connection paths, preferably semi-permanently switched connection paths, in digital time-division multiplex exchanges, in which line trunk grounds (LTG) divided into a plurality of units (DIU, GS, LIU) and a double switching network (SN), via which each connection is conducted twice in parallel, form peripheral function blocks which are under the influence of a co-ordination processor (CP), characterised in that the channel information items which proceed from the two switching networks parts (SN0, SN1) to a line trunk group (LTG) and which in part are to be transmitted further via the latter in outgoing transmission direction to a transmission link (ÜB) are synchronously compared with one another bit-by-bit in its unit (LIU) which is on the input side in this transmission direction, in that the channel information items proceeding in the incoming transmission direction from the transmission link (ÜB) to this line trunk group (LTG) are provided in the unit (DIU) of the same, that is on the input side on this transmission direction, with a parity bit (PB) and, after passing through all units (DIU, GS, LIU) in the aforesaid same last unit (LIU) in the incoming transmission direction, in which the comparison of the PCM signal information items (DATA) coming from the switching network (SN) takes place, is subjected to a parity check, in that these channel information items coming from the switching network are likewise provided with a parity bit in said unit (LIU) of the line trunk ground (LTG) and inasmuch as they are transmitted to the transmission link (ÜB), are subjected to a parity check in the aforesaid unit (DIU) of the line trunk ground (LTG) that is on the input side on the incoming transmission direction, and in that, inasmuch as this parity check signals the presence of an error, the parity bit (PB) with which the channel information items arriving from the transmission link (ÜB) are provided, is inverted to contradict the actual parity, so that the corresponding parity check in the last unit (LIU) in this transmission direction also produces an error signal.

2.  Method according to Claim 1, for use in a time-division multiplex exchange in which the line trunk grounds (LTG) contain a switching stage (SM) as component, which is controlled by drive addresses that are stored in a latch (CM) and are read out cyclically without corruption, characterised in that the drive addresses stored in the latch (CM) are provided with a parity bit (PB) and are subjected to a parity check after reading out in each case, and in that, in the event of an error being detected, the parity bit (PB) assigned to the channel information items (DATA) transmitted to the last unit (LIU) of the line trunk ground in the incoming transmission direction is inverted to contradict the actual parity of these channel information items (DATA).

3.  Method according to Claim 1 or 2, characterised in that the error messages resulting from the two types of monitoring are counted, and their sum is compared at specified intervals with a quality threshold, a fault signal being triggered when the latter is exceeded.

4.  Method according to Claim 3, characterised in that in the event of a fault message, the respective monitoring device (SVLTG) is checked in that the channel information coming from the switching network (SN) is subjected to a parity check before and after an inversion of the associated parity bit by the monitoring device before passing through further units of the line trunk ground (LTG).

5.  Method according to Claim 4, characterised in that in the event of a fault message affecting a line trunk ground, for further error location, the respective monitoring device (SVLTG) is checked in that the channel information coming from the switching network (SN) is subjected to a parity check before and after an inversion of the associated parity bit by the monitoring device before passing through further units of the line trunk ground (LTG), test loops are successively closed to the components (LIU, GS, DIU) of the line trunk ground (LTG), via which test loops a test bit combination provided with a parity bit is conducted in each case and is subsequently subjected to a parity check by the monitoring device (SVLTG).

6. Method according to Claim 3, characterised in that in the event of a fault message relating to the switching network (SN) in respect of a semi-permanent connection, this connection is cleared and is reestablished via another connection path.

**Revendications**

1. Procédé pour contrôler la transmission d'informations dans des voies de liaison quadrifilaires interconnectées, notamment des voies de liaison interconnectées d'une manière semi-permanente, dans des centraux numériques à multiplexage temporel, dans lesquels des modules de raccordement (LTG) répartis entre plusieurs unités (DIU,GS,LIE) et un réseau de couplage doublé (SN), dans lequel chaque liaison passe deux fois en parallèle, forment des blocs fonctionnels périphériques, qui sont placés sous l'influence d'un processeur de coordination (CP),
caractérisé par le fait
que les informations de canaux, qui parviennent des deux parties (SN0, SN1) du réseau de couplage à un module de raccordement (LTG) et doivent être en partie retransmises, par l'intermédiaire de ce module, à une section de transmission (ÜB) dans le sens de transmission de départ, sont comparées en permanence entre elles, bit à bit, dans l'unité (LIU) de cette section, qui est située sur le côté entrée dans ce sens de transmission, que les informations de canaux, qui parviennent de la section de transmission (ÜB) à ce module de raccordement (LTG) dans le sens de transmission d'arrivée, sont affublées d'un bit de parité (PB) dans l'unité (DIU) de ce module, qui est située sur côté d'entrée dans ce sens de transmission, et après avoir traversé toutes les unités (DIU, GS, LIU), sont soumises à un contrôle de parité de parité, dans ladite unité identique (LIU), qui est la dernière dans le sens de transmission d'arrivée et dans laquelle se produit la comparaison des informations de signaux MIC (DATA) qui arrivent du réseau de couplage (SN), que ces informations de canaux, qui arrivent du réseau de couplage, reçoivent également un bit de parité dans cette unité (LIU) du module de raccordement (LTG) et, dans la mesure où elles sont transmises à la voie de transmission (ÜB), sont soumises à un contrôle de parité dans ladite unité (DIU) du module de raccordement (LTG), qui est située du côté entrée dans le sens de transmission d'arrivée, et que dans la mesure où ce contrôle de parité indique la présence d'une erreur, le bit de parité (PB), qui est affecté aux informations de canaux arrivant de la section de transmission (ÜB), est inversé d'une manière contradictoire avec la parité effective, de sorte que le contrôle de parité correspondant fournit également, dans l'unité (LIU) qui est la dernière dans ce sens de transmission, un signal d'erreur.

2. Procédé suivant la revendication 1 destiné à être mis en oeuvre dans un central à multiplexage temporel, dans lequel les modules de raccordement (LTG) contiennent, comme composant, un étage de couplage (SM), qui est commandé par des adresses de commande mémorisées dans une mémoire de retenue (CM) et lues cycliquement sans destruction, caractérisé par le fait
que les adresses de commande mémorisées dans la mémoire de retenue (CM) sont affublées d'un bit de parité (PB) et sont soumises, respectivement après la lecture, à un contrôle de parité et que d7ans le cas où une erreur est déterminée, le bit de parité (PB) affecté aux informations de canaux (DATA) transmises à l'unité (LIU) du module de raccordement, qui est la dernière dans le sens de transmission d'arrivée, est inversé d'une manière opposée à la parité effective de ces informations de canaux (DATA).

3. Procédé suivant la revendication 1 ou 2, caractérisé par le fait que les signalisations d'erreurs, que l'on obtient dans les deux types de contrôle, et à des intervalles de temps déterminés leur somme est comparée à une valeur de seuil de qualité, dont le dépassement déclenche la production d'un signal de perturbation.

4. Procédé suivant la revendication 3, caractérisé par le fait que dans le cas d'une signalisation de perturbation, il se produit un contrôle du dispositif concerné de contrôle (SVLTG), lors duquel l'information de canal arrivant du réseau de couplage (SN) est soumise à un contrôle de parité avant et après une inversion du bit de parité associé, dans le dispositif de contrôle, avant que cette information ne traverse d'autres unités du module de raccordement (LTG).

5. Procédé suivant la revendication 4, caractérisé par le fait que dans le cas d'une signalisation de perturbation concernant un module de raccordement, pour réaliser la poursuite de la localisation de l'erreur, le dispositif de contrôle (SVLTG) est contrôlé par le fait que l'information de canal arrivant du réseau de couplage (SN) est soumise à un contrôle de parité avant et après l'inversion du bit de parité associé, par le dispositif de contrôle, avant que l'information ne traverse d'autres unités du module de raccordement (LTG), et des boucles de contrôle sont raccordées successivement aux unités (LIU,GS,DIU) du module de raccordement (LTG), boucles dans lesquelles est envoyée respectivement une combinaison de bits de contrôle affublée d'un bit de parité et qui est ensuite soumise à un contrôle de parité dans le dispositif de contrôle (SVLTG).

6. Procédé suivant la revendication 3, caractérisé par le fait que dans le cas d'une signalisation de perturbation rapportée à une liaison semi-permanente et concernant le réseau de couplage (SN), cette liaison est interrompue et est à nouveau établie par l'intermédiaire d'une autre voie de liaison.

FIG 1

EVST

DE

Tst

Tst

DE

Tst

Tst

125 μs

ÜB

125 μs

ÜB

EWSD

LTG

DIU GS LIU

LTG

DIU GS LIU

SN

SN1

SN

CP

EP 0 250 936 B1

# FIG 2

EP 0 250 936 B1

# FIG 3